# EUROPÄISCHE PATENTSCHRIFT

(11) **EP 2 855 551 B1**
(45) Veröffentlichungstag und Bekanntmachung des Hinweises auf die Patenterteilung: **09.03.2016**
(21) Anmeldenummer: 13725672.3
(22) Anmeldetag: 29.05.2013
(51) Int. Cl.: C08G 18/42, C08G 18/76, C08G 18/48, C08G 18/40, C08K 5/5333, C08K 5/521, C08J 9/00, C08G 101/00, C08K 5/00

(54) **VERFAHREN ZUR HERSTELLUNG VON POLYURETHAN-HARTSCHAUMSTOFFEN**
METHOD FOR MANUFACTURING RIGID POLYURETHANE FOAMS
PROCÉDÉ DESTINÉ À LA FABRICATION DE MOUSSES RIGIDES DE POLYURÉTHANE

(30) Priorität: 30.05.2012 EP 12169980
(43) Veröffentlichungstag der Anmeldung: 08.04.2015
(73) Patentinhaber: BASF SE, 67056 Ludwigshafen (DE)
(72) Erfinder: FABISIAK, Roland, 49448 Brockum (DE); KAMPF, Gunnar, 32351 Stemwede-Haldem (DE); SCHÖN, Lars, 49078 Osnabrück (DE); JACOBMEIER, Olaf, 32312 Lübbecke (DE)
(86) Internationale Anmeldenummer: PCT/EP2013/061022
(87) Internationale Veröffentlichungsnummer: WO 2013/178657

(56) Entgegenhaltungen:
- WO-A1-2007/025888
- JP-A- 2005 307 143
- JP-A- 2005 307 147
- US-A1- 2001 006 986
- US-A1- 2010 113 630
- Eastman: "Eastman Triethyl Phosphate (TEP", , Juli 2003 (2003-07), XP055035272, Gefunden im Internet: URL:http://www.eastman.com/Literature_Cent er/G/GN330.pdf [gefunden am 2012-08-10]

## Beschreibung

Die vorliegende Erfindung betrifft ein Verfahren zur Herstellung von Polyurethan-Hartschaumstoffen. Die vorliegende Erfindung betrifft außerdem die so erhältlichen Hartschaumstoffe selbst sowie deren Verwendung zur Herstellung von Sandwich-Elementen mit starren oder flexiblen Deckschichten. Darüber hinaus betrifft die vorliegende Erfindung die zur Herstellung der Polyurethan-Hartschaumstoffe verwendete Polyolkomponente.

Die Herstellung von Polyurethan-Hartschaumstoffen durch Umsetzung von organischen oder modifizierten organischen Di- oder Polyisocyanaten mit höhermolekularen Verbindungen mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literatur-veröffentlichungen beschrieben. Die Herstellung von Polyurethan-Hartschaumstoffen wird beispielsweise in WO 2007/025888 beschrieben.

WO 2007/025888 A1 offenbart diie Herstellung von Polyisocyanurat-Hartschaum, wobei die Polyolkomponente Polyesterpolyol und Polyetherpolyol, sowie TCPP als Flammschutzmttel, enthält, der Einsatz von Polyetherpolyesterpolyol und ein Flammschutzmittelgemisch werden nicht offenbart.

Polyurethan-Hartschaumstoffe zeigen häufig eine hohe Sprödigkeit, was sich beim Zuschnitt der Schäume in einer starken Staubentwicklung und hohen Empfindlichkeit der Schäume äußert. Dies kann beim Sägen des Schaumstoffs, vor allem in Verbundelementen mit metallischen Deckschichten und einem Kern aus einem Polyisocyanuratschaum, zur Rissbildung im Schaum führen. Bei höheren Mischungsverhältnissen nimmt die Sprödigkeit von Polyisocyanurat-Schäumen (PIR-Schäumen), und damit die Neigung zur Rissbildung, zu.

Als weiterer Nachteil von Polyesterpolyolen, die auf aromatischen Carbonsäuren oder deren Derivaten wie Terephthalsäure oder Phthalsäureanhydrid basieren, macht sich oft die hohe Viskosität der Polyesterpolyole negativ bemerkbar, da dadurch das Vermischen mit der Isocyanat-Komponente deutlich erschwert wird.

Zudem kann es in bestimmten Systemen zur Herstellung von PU-Hartschaumstoffen, zum Beispiel unter Verwendung von Glycerin als höherfunktioneller alkoholischer Polyester-Komponente, zu Problemen mit einer unzureichenden Maßhaltigkeit kommen, d.h. das Schaumstoff-Produkt verformt sich nach der Entformung oder nach der Druckstrecke bei Verarbeitung nach dem Doppelbandverfahren deutlich.

Auch ist das Problem des Verhaltens von PU-Hartschaumstoffen im Brandfall bisher nicht für alle Systeme befriedigend gelöst. Beispielsweise kann sich beim Einsatz von Trimethylolpropan (TMP) als höherfunktioneller alkoholischer Polyester-Komponente im Brandfall eine toxische Verbindung bilden.

Ein generelles Problem bei der Herstellung von Hartschaumstoffen ist die Ausbildung von Oberflächendefekten, vorzugsweise an der Grenzfläche zu metallischen Deckschichten. Diese Schaumoberflächendefekte bedingen die Ausbildung einer unebenen Metalloberfläche bei Sandwichelementen und führen somit oft zu einer optischen Beanstandung des Produkts. Eine Verbesserung der Schaumoberfläche vermindert die Häufigkeit des Auftretens solcher Oberflächendefekte und führt somit zu einer optischen Verbesserung der Oberfläche von Sandwichelementen.

Ferner ist es allgemein wünschenswert, Systeme mit einer möglichst hohen Eigenreaktivität bereitzustellen, um den Einsatz von Katalysatoren zu minimieren.

Aufgabe der Erfindung ist es, eine Polyolkomponente bereitzustellen, welche eine hohe Eigenreaktivität aufweist. Aufgabe der Erfindung ist es weiterhin, PU-Hartschaumstoffe mit geringer Sprödigkeit bereitzustellen, die beim Sägen von Verbundelementen nicht zur Rissbildung neigen. Darüber hinaus sollen die PU-Hartschaumstoffe ein verbessertes Härtungsverhalten zeigen.

Die verwendeten Komponenten und die daraus hergestellten Abmischungen sollen zudem eine niedrige Viskosität aufweisen, um bei der Herstellung der PU-Hartschaumstoffe gut dosiert und vermischt werden zu können. Auch die Löslichkeit von Treibmitteln, zum Beispiel von Pentan in der Polyolkomponente, soll möglichst gut sein.

Aufgabe der Erfindung ist es weiterhin, die Maßhaltigkeit der PU-Hartschaumstoffe zu verbessern. Die Bildung von toxischen Verbindungen im Brandfall soll möglichst gering sein. Weiterhin soll die Ausbildung von Oberflächendefekten vermindert werden.

Gelöst wird die Aufgabe durch ein Verfahren zur Herstellung von Polyurethan-Hartschaumstoffen durch Umsetzung von
A) einem oder mehreren organischen Polyisocyanaten,
B) einem oder mehreren Polyesterpolyolen,
C) gegebenenfalls einem oder mehreren Polyetherpolyolen,
D) einem Flammschutzmittelgemisch,
E) weiteren Hilfsmitteln oder Zusatzstoffen,
F) einem oder mehreren Treibmitteln, sowie
G) Katalysatoren,
dadurch gekennzeichnet, dass das Flammschutzmittelgemisch D)
d1) 10 bis 90 Gew.-%, bezogen auf die Menge des Flammschutzmittelgemisches, eines Flammschutzmittels mit einem Siedepunkt von kleiner oder gleich 220°C, und
d2) 10 bis 90 Gew.-%, bezogen auf die Menge des Flammschutzmittelgemischs, eines phosphorhaltigen Flammschutzmittels mit einem Siedepunkt von über 220 °C,
wobei die Summe der Komponenten d1) und d2) 100 Gew.-% ergibt, enthält und das Polyesterpolyol B) mindestens ein Polyetheresterpolyol, enthaltend das Veresterungsprodukt von b1) 10 bis 70 Mol-% einer Dicarbonsäurezusammensetzung, enthaltend b11) 50 bis 100 Mol-%, bezogen auf die Dicarbonsäurezusammensetzung, einer oder mehrerer aromatischer Dicarbonsäuren oder Derivate derselben,
b12) 0 bis 50 Mol-%, bezogen auf die Dicarbonsäure-Zusammensetzung b1), einer oder mehrerer aliphatischer Di-carbonsäuren oder Derivate derselben,
b2) 2 bis 30 Mol-% einer oder mehrerer Fettsäuren oder Fettsäurederivate, b3) 10 bis 70 Mol-% eines oder mehrerer aliphatischer oder cycloaliphatischer Diole mit 2 bis 18 C-Atomen oder Alkoxylate derselben, b4) 2 bis 50 Mol-% eines Polyetherpolyols mit einer Funktionalität größer oder gleich 2, hergestellt durch Alkoxylierung eines Polyols mit einer Funktionalität größer oder gleich 2, jeweils bezogen auf die Gesamtmenge der Komponenten b1) bis b4), wobei sich die Komponenten b1) bis b4) zu 100 Mol-% addieren, enthält.

Gegenstand der vorliegenden Erfindung ist außerdem eine Polyolkomponente enthaltend die vorgenannten Komponenten B) bis G). Im Allgemeinen beträgt das Massenverhältnis der Polyesterpolyol-Komponente B) zu Polyetherpolyol-Komponente C) mindestens 1.

Weitere Gegenstände der vorliegenden Erfindung sind Polyurethan-Hartschaumstoffe, erhältlich nach dem erfindungsgemäßen Verfahren, sowie deren Verwendung zur Herstellung von Sandwich-Elementen mit starren oder flexiblen Deckschichten. Unter Polyurethan-Hartschaumstoffen werden auch Polyisocyanurat-Hartschaumstoffe verstanden. Diese stellen spezielle Polyurethan-Hartschaumstoffen dar.

Die Erfindung wird nachfolgend näher erläutert.

### Komponente B

Im Rahmen der vorliegenden Offenbarung sind die Begriffe "Polyesterpolyol" und "Polyesterol" gleichbedeutend, ebenso die Begriffe "Polyetherpolyol" und "Polyetherol".

Geeignete Polyesterpolyole B) können beispielsweise aus Dicarbonsäuren mit 2 bis 12 Kohlenstoffatomen, vorzugsweise aromatischen Dicarbonsäuren oder Gemischen aus aromatischen und aliphatischen Dicarbonsäuren und mehrwertigen Alkoholen, vorzugsweise Diolen, mit 2 bis 12 Kohlenstoffatomen, vorzugsweise 2 bis 6 Kohlenstoffatomen hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Verwendet werden können ebenso Derivate dieser Dicarbonsäuren, wie beispielsweise Dimethylterephthalat. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der weiteren Polyesterpolyole B) kommen auch biobasierte Ausgangsstoffe und/oder deren Derivate in Frage, wie z. B. Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Die Polyesterkomponente B) enthält mindestens ein Polyetheresterpolyol, enthaltend das Veresterungsprodukt von
b1) 10 bis 70 Mol-% einer Dicarbonsäurezusammensetzung, enthaltend
b11) 50 bis 100 Mol-%, bezogen auf die Dicarbonsäurezusammensetzung, einer oder mehrerer aromatischer Dicarbonsäuren oder Derivate derselben,
b12) 0 bis 50 Mol-%, bezogen auf die Dicarbonsäurezusammensetzung b1), einer oder mehrerer aliphatischer Dicarbonsäuren oder Derivate derselben,
b2) 2 bis 30 Mol-% einer oder mehrerer Fettsäuren und/oder Fettsäurederivate,
b3) 10 bis 70 Mol-% eines oder mehrerer aliphatischer oder cycloaliphatischer Diole mit 2 bis 18 C-Atomen oder Alkoxylate derselben,
b4) 2 bis 50 Mol-% eines Polyetherpolyols mit einer Funktionalität größer oder gleich 2, hergestellt durch Alkoxylierung eines Polyols mit einer Funktionalität größer oder gleich 2,
jeweils bezogen auf die Gesamtmenge der Komponenten b1) bis b4), wobei sich die Komponenten b1) bis b4) zu 100 Mol-% addieren.

Vorzugsweise enthält die Komponente b11) mindestens eine Verbindung, die aus der Gruppe bestehend aus Terephthalsäure, Dimethylterephthalat (DMT), Polyethylenterephthalat (PET), Phthalsäure, Phthalsäureanhydrid (PSA) und Isophthalsäure ausgewählt wird. Besonders bevorzugt enthält die Komponente b11) mindestens eine Verbindung aus der Gruppe bestehend aus Terephthalsäure, Dimethylterephthalat (DMT), Polyethylenterephthalat (PET) und Phthalsäureanhydrid (PSA). Ganz besonders bevorzugt enthält die Komponente b11) Phthalsäureanhydrid, Dimethylterephthalat, Terephthalsäure oder Gemische daraus. Die aromatischen Dicarbonsäuren oder deren Derivate der Komponente b11) werden besonders bevorzugt aus den vorgenannten aromatischen Dicarbonsäuren bzw. Dicarbonsäurederivaten und im speziellen aus Terephthalsäure und/oder Dimethylterephthalat (DMT) ausgewählt. Terephthalsäure und/oder DMT in Komponente b11) führt zu Polyetheresterpolyolen B) mit besonders guten Brandschutzeigenschaften.

Im Allgemeinen sind aliphatische Dicarbonsäuren oder -derivate (Komponente b12)) zu 0 bis 30 Mol-%, bevorzugt 0 bis 10 Mol-% in der Dicarbonsäurezusammensetzung b1) enthalten. Besonders bevorzugt enthält die Dicarbonsäurezusammensetzung b1) keine aliphatischen Dicarbonsäuren oder Derivate derselben und besteht somit zu 100 Mol-% aus einer oder mehreren aromatischen Dicarbonsäuren oder deren Derivate, wobei die vorgenannten bevorzugt sind. Geeignete Derivate sind im Allgemeinen die Ester, bevorzugt die C₁₋₆-Alkylester, insbesondere die Methylester der Dicabonsäuren.

Vorzugsweise wird die Komponente b2) in Mengen von 3 bis 20 Mol-%, besonders bevorzugt 5 bis 18 Mol-% eingesetzt.

Vorzugsweise wird die Komponente b3) in Mengen von 20 bis 60 Mol-%, bevorzugt von 25 bis 55 Mol-%, besonders bevorzugt von 30 bis 45 Mol-% eingesetzt.

Vorzugsweise wird die Komponente b4) in Mengen von 2 bis 40 Mol-%, bevorzugt 8 bis 35 Mol-%, besonders bevorzugt 15 bis 25 Mol-% eingesetzt.

In einer bevorzugten Ausführungsform der vorliegenden Erfindung ist der Aminkatalysator zur Herstellung der Komponente b4) ausgewählt aus der Gruppe enthaltend Dimethylethanolamin (DMEOA), Imidazol und Imidazolderivate sowie Mischungen daraus, besonders bevorzugt ist Imidazol.

In einer Ausführungsform der Erfindung besteht die Fettsäure oder das Fettsäurederivat b2) aus einer Fettsäure bzw. Fettsäuremischung, einem oder mehreren Glycerinestern von Fettsäuren oder von Fettsäuremischungen und/oder einem oder mehreren Fettsäuremonoestern, wie beispielsweise Biodiesel oder Methylestern von Fettsäuren, besonders bevorzugt besteht die Komponente b2) aus einer Fettsäure oder Fettsäuremischung und/oder einem oder mehreren Fettsäuremonoestern, spezifischer besteht die Komponente b2) aus einer Fettsäure oder Fettsäuremischung und/oder Biodiesel und im speziellen besteht die Komponente b2) aus einer Fettsäure oder Fettsäuremischung.

In einer bevorzugten Ausführungsform der Erfindung ist die Fettsäure oder das Fettsäurederivat b2) ausgewählt aus der Gruppe bestehend aus Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, tierischem Talg, wie beispielsweise Rindertalg, Fettsäuren, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

In einer weiteren bevorzugten Ausführungsform der vorliegenden Erfindung ist die Fettsäure oder das Fettsäurederivat b2) Ölsäure, Biodiesel, Sojaöl, Rapsöl oder Talg, besonders bevorzugt Ölsäure, Sojaöl, Rapsöl oder Rindertalg und im speziellen Ölsäure. Die Fettsäure oder das Fettsäurederivat verbessert unter anderem die Treibmittellöslichkeit bei der Herstellung von Polyurethanschaumstoffen. Ganz besonders bevorzugt umfasst Komponente b2) kein Triglycerid, insbesondere kein Öl oder Fett. Das durch die Veresterung bzw. Umesterung freiwerdende Glycerin aus dem Triglycerid verschlechtert wie oben ausgeführt die Maßhaltigkeit des Hartschaums. Bevorzugte Fettsäuren und Fettsäurederivate sind im Rahmen von Komponente b2) insofern die Fettsäuren selbst sowie Alkylmonoester von Fettsäuren oder Alkylmonoester von Fettsäuregemischen, insbesondere die Fettsäuren selbst und/oder Biodiesel.

Vorzugsweise ist das aliphatische oder cycloaliphatische Diol b3) ausgewählt aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-pentandiol und Alkoxylaten derselben. Besonders bevorzugt ist das aliphatische Diol b3) Monoethylenglykol oder Diethylenglykol, insbesondere Diethylenglykol.

Vorzugsweise wird ein Polyetherpolyol b4) mit einer Funktionalität größer 2 eingesetzt, das durch Alkoxylierung eines Polyols mit einer Funktionalität größer oder gleich 3 hergestellt wurde.

Im Allgemeinen weist das Polyetherpolyol b4) eine Funktionalität von größer als 2 auf. Vorzugsweise weist es eine Funktionalität größer oder gleich 2,7, insbesondere größer oder gleich 2,9 auf. Im Allgemeinen weist es eine Funktionalität von kleiner oder gleich 6, bevorzugt kleiner oder gleich 5, besonders bevorzugt kleiner oder gleich 4 auf.

In einer Ausführungsform der vorliegenden Erfindung ist das Polyetherpolyol b4) erhältlich durch Umsetzung eines Polyols mit einer Funktionalität von größer als 2 mit Ethylenoxid und/ oder Propylenoxid, bevorzugt mit Ethylenoxid.

In einer weiteren bevorzugten Ausführungsform ist das Polyetherpolyol b4) erhältlich durch Alkoxylierung, vorzugsweise Ethoxylierung, eines Polyols, ausgewählt aus der Gruppe bestehend aus Sorbit, Pentaerythrit, Trimethylolpropan, Glycerin, Polyglycerin und deren Gemischen, besonders bevorzugt eines Polyols, ausgewählt aus der Gruppe bestehend aus Trimethylolpropan und Glycerin.

In einer besonders bevorzugten Ausführungsform ist das Polyetherpolyol b4) erhältlich durch Alkoxylierung mit Ethylenoxid, was zu Polyurethan-Hartschaumstoffen mit verbesserten Brandschutzeigenschaften führt.

In einer besonders bevorzugten Ausführungsform der vorliegenden Erfindung wird die Komponente b4) durch anionische Polymerisation von Propylenoxid oder Ethylenoxid, bevorzugt Ethylenoxid, in Gegenwart von Alkoxylierungskatalysatoren wie Alkalihydroxiden, wie Natrium- oder Kaliumhydroxid, oder Alkalialkoholaten, wie Natriummethylat, Natrium- oder Kaliumethylat oder Kaliumisopropylat, oder aminischen AlkoxylierungsKatalysatoren, wie Dimethylethanolamin (DMEOA), Imidazol und Imidazolderivate sowie Mischungen daraus, unter Verwendung mindestens eines Startermoleküls hergestellt. Bevorzugte Alkoxylierungskatalysatoren sind dabei KOH und aminische Alkoxylierungskatalysatoren. Da bei Verwendung von KOH als Alkoxylierungskatalysator der Polyether zunächst neutralisiert werden muss und das entstehende Kaliumsalz abgetrennt werden muss, bevor der Polyether als Komponente b4) in der Veresterung eingesetzt werden kann, ist die Verwendung von aminischen Alkoxylierungskatalysatoren bevorzugt. Bevorzugte aminische Alkoxylierungskatalysatoren sind ausgewählt aus der Gruppe enthaltend Dimethylethanolamin (DMEOA), Imidazol und Imidazolderivate sowie Mischungen daraus, besonders bevorzugt ist Imidazol.

In einer speziellen Ausführungsform der Erfindung besteht das Polyetherpolyol b4) aus dem Umsetzungsprodukt von Glycerin mit Ethylenoxid und/ oder Propylenoxid, bevorzugt mit Ethylenoxid. Hierdurch ergibt sich eine besonders hohe Lagerstabilität der Komponente B.

In einer weiteren speziellen Ausführungsform der Erfindung besteht das Polyetherpolyol b4) aus dem Umsetzungsprodukt von Trimethylolpropan mit Ethylenoxid und/oder Propylenoxid, bevorzugt mit Ethylenoxid. Hierdurch ergibt sich ebenfalls eine besonders hohe verbesserte Lagerstabilität der Komponente B).

Vorzugsweise weist das Polyetherpolyol b4) eine OH-Zahl im Bereich von 150 bis 1250 mg KOH/g, bevorzugt 300 bis 950 mg KOH/g, besonders bevorzugt 500 bis 800 mg KOH/g auf.

In einer weiteren bevorzugten Ausführungsform werden pro kg der Komponente B) mindestens 200 mmol, besonders bevorzugt mindestens 400 mmol, insbesondere bevorzugt mindestens 600 mmol, speziell bevorzugt mindestens 800 mmol, im speziellen mindestens 1000 mmol der Komponente b4) verwendet.

In einer besonders bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 800 mg KOH/g, bevorzugt 500 bis 650 mg KOH/g, liegt und Imidazol als Alkoxylierungskatalysator Verwendung findet.

In einer insbesondere bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 800 mg KOH/g, bevorzugt 500 bis 650 mg KOH/g liegt, Imidazol als Alkoxylierungskatalysator Verwendung findet und das aliphatische oder cycloaliphatische Diol b3) Diethylenglykol ist und die Fettsäure oder das Fettsäurederivat b2) Ölsäure ist.

Vorzugsweise weist das Polyetheresterpolyol B) eine zahlengewichtete mittlere Funktionalität von größer oder gleich 2, bevorzugt von größer als 2, besonders bevorzugt von größer als 2,2 und insbesondere von größer als 2,3 auf, was zu einer höheren Vernetzungsdichte des damit hergestellten Polyurethans und damit zu besseren mechanischen Eigenschaften des Polyurethanschaums führt.

Zur Herstellung der Polyetheresterpolyole B) können die aliphatischen und aromatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280°C, vorzugsweise 180 bis 260°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyetheresterpolyole werden die organischen Polycarbonsäuren und/oder -derivate und mehrwertigen Alkohole vorteilhafterweise im Molverhältnis von 1 : 1 bis 2,2, vorzugsweise 1 : 1,05 bis 2,1 und besonders bevorzugt 1 : 1,1 bis 2,0 polykondensiert.

Die erhaltenen Polyetheresterpolyole weisen im Allgemeinen ein zahlenmittleres Molekulargewicht von 300 bis 3000, vorzugsweise 400 bis 1000 und insbesondere 450 bis 800 auf.

Im Allgemeinen ist der Anteil der Polyesterpolyole B) mindestens 10 Gew.-%, bevorzugt mindestens 20 Gew.-%, besonders bevorzugt mindestens 40 Gew.-% und im Speziellen mindestens 50 Gew.-%, bezogen auf die Summe der Komponenten B) bis G).

Zur Herstellung der Polyurethan-Hartschaumstoffe nach dem erfindungsgemäßen Verfahren finden, neben den oben beschriebenen speziellen Polyesterpolyolen (Polyetheresterpolyole), die an sich bekannten Aufbaukomponenten Verwendung, zu denen im Einzelnen folgendes auszuführen ist.

Neben den Polyetheresterpolyolen können weitere Polyesterpolyole enthalten sein. Im Allgemeinen beträgt das Massenverhältnis der Polyetheresterpolyole zu den weiteren Polyesterpolyolen mindestens 0,1, bevorzugt mindestens 0,25, besonders bevorzugt mindestens 0,5 und insbesondere mindestens 0,8. In einer insbesondere bevorzugten Ausführungsform werden ausschließlich Polyetheresterpolyole aus den Komponenten b1) bis b4) als Komponente B) eingesetzt.

### Komponente A

Unter einem Polyisocyanat wird im Rahmen der vorliegenden Erfindung eine organische Verbindung verstanden, welche mindestens zwei reaktive Isocyanatgruppen pro Molekül enthält, d.h. die Funktionalität beträgt mindestens 2. Sofern die eingesetzten Polyisocyanate oder ein Gemisch mehrerer Polyisocyanate keine einheitliche Funktionalität aufweisen, so beträgt der zahlengewichtete Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanate in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendüsocyanate mit 4 bis 12 Kohlenstoffatomen im Alkylenrest, wie 1,12-Dodecandiioscyanat, 2-Ethyltetramethylendiisocyanat-1,4,2-methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4-und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandüsocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyldüsocyanat, 1,2-Diphenylethandüsocyanat und/oder p-Phenylendiisocyanat (PPDI), Tri-, Tetra-, Penta-, Hexa-, Hepta- und/oder Octamethylendiisocyanat, 2-Methylpentamethylen-1,5-düsocyanat, 2-Ethylbutylen-1,4-düsocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandüsocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate der Komponente A) folgende Ausführungsformen:
i) Mehrfach funktionelle Isocyanate auf Basis von Toluylendiisocyanat (TDI), insbesondere 2,4-TDI oder 2,6-TDI oder Mischungen aus 2,4- und 2,6-TDI;
ii) Mehrfach funktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im Folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3, 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente A) mindestens zwei, besonders bevorzugt mindestens 2,2 und insbesondere mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, besonders bevorzugt von 6 bis 9 mmol/g, insbesondere von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat, ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat, sogenanntes "Polymer-MDI", und weist eine Funktionalität von mindestens 2,4 auf.

Die Viskosität der eingesetzten Komponente A) kann in einem weiten Bereich variieren. Vorzugsweise weist die Komponente A) eine Viskosität von 100 bis 3000 mPa·s, besonders bevorzugt von 200 bis 2500 mPa·s, auf.

### Komponente C

Mit verwendet werden können auch Polyetherpolyole C), die nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diaminodiphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei oder mehrwertige Alkohole, wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Die Polyetherpolyole C), vorzugsweise Polyoxypropylenpolyole und Polyoxyethylenpolyole, besonders bevorzugt Polyoxyethylenpolyole, besitzen eine Funktionalität von vorzugsweise 2 bis 6, besonders bevorzugt 2 bis 4, insbesondere 2 bis 3 und im Speziellen 2 und zahlenmittlere Molekulargewichte von 150 bis 3000 g/mol, vorzugsweise 200 bis 2000 g/mol und insbesondere 250 bis 1000 g/mol.

In einer bevorzugten Ausführungsform der Erfindung wird ein alkoxyliertes Diol, bevorzugt ein ethoxyliertes Diol, beispielsweise ethoxylierter Ethylenglykol, als Polyetherpolyol C) mitverwendet, vorzugsweise handelt es sich dabei um Polyethylenglykol.

In einer speziellen Ausführungsform der Erfindung besteht die Polyetherol-Komponente C) ausschließlich aus Polyethylenglykol, vorzugsweise mit einem zahlenmittleren Molekulargewicht von 250 bis 1000 g/mol.

Im Allgemeinen beträgt der Anteil der Polyetherpolyole C) 0 bis 11 Gew.-%, bevorzugt 2 bis 9 Gew.-%, besonders bevorzugt 4 bis 8 Gew.-%, bezogen auf die Summe der Komponenten B) bis G).

Im Allgemeinen beträgt - sofern die Komponente C) vorhanden ist - das Massenverhältnis der Komponente B) zu der Komponente C) mindestens 1, vorzugsweise 3, besonders bevorzugt 4, insbesondere 5 und speziell bevorzugt 7.

Im Allgemeinen beträgt weiterhin - sofern die Komponente C) vorhanden ist - das Massenverhältnis der Komponente B) zu der Komponente C) kleiner als 80, bevorzugt kleiner als 40, besonders bevorzugt kleiner als 30, insbesondere bevorzugt kleiner als 20, speziell bevorzugt kleiner als 16 und im speziellen kleiner als 13.

### Komponente D

Die Komponente D) ist ein Flammschutzmittelgemisch, das dadurch gekennzeichnet ist, dass es d1) zu mindestens 10 Gew.-% und zu höchstens 90 Gew.-%, bezogen auf die Menge des Flammschutzmittelgemisches, ein Flammschutzmittel mit einem Siedepunkt von kleiner oder gleich 220°C, und d2) zu mindestens 10 Gew.-% und höchstens 90 Gew.-% aus einem oder mehreren phosphorhaltigen Flammschutzmitteln mit einem Siedepunkt von größer als 220 °C besteht.

Als Flammschutzmittel d1) können Phosphate oder Phosphonate, wie beispielsweise Diethylethanphosphonat (DEEP), Triethylphosphat (TEP) und Dimethylpropylphosphonat (DMPP), eingesetzt werden.

Geeignete Flammschutzmittel d2) sind beispielsweise bromierte Ester, bromierte Ether (Ixol) oder bromierte Alkohole wie Dibromneopentylakohol, Tribromneopentylalkohol, Tetrabromphthalat Diol (DP 54) und PHT-4-Diol, sowie chlorierte Phosphate wie Tris-(2-chlorethyl)phosphat, Tris-(2-chlorpropyl)phosphat (TCPP), Tris(1,3-dichlorpropyl)phosphat, Trikresylphosphat, Diphenylkresylphosphat (DPK), Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.

Geeignete Flammschutzmittel d1) mit einem Siedepunkt unterhalb von 220 °C weisen keine mit Isocyanatgruppen reaktive Gruppen auf. Sie sind vorzugsweise phosphorhaltig, besonders bevorzugt halogenfrei und insbesondere ausgewählt aus der Gruppe bestehend aus Diethylethylphosphonat (DEEP), Triethylphosphat (TEP) und Dimethylpropylphosphonat (DMPP) sowie Gemischen der genannten Flammschutzmittel.

Bevorzugte Flammschutzmittel d2) mit Siedepunkt über 220 °C weisen keine mit Isocyanatgruppen reaktive Gruppen auf. Vorzugsweise sind die Flammschutzmittel bei Raumtemperatur flüssig. Besonders bevorzugte phosphorhaltige Flammschutzmittel sind ausgewählt aus der Gruppe bestehend aus Tris-(2-chlorpropyl)phosphat (TCPP), Diphenylkresylphsphat (DPK); Triphenylphosphat (TPP) sowie Gemischen der genannten Flammschutzmittel. Insbesondere bevorzugt sind halogenfreie Flammschutzmittel.

Vorzugsweise besteht die Komponente D) zu 10 bis 70 Gew.-% aus einem oder mehreren Flammschutzmitteln d1) mit einem Siedepunkt von kleiner oder gleich 220°C, und zu 30 bis 90 Gew.-% aus einem oder mehreren phosphorhaltigen Flammschutzmitteln d2) mit einem Siedepunkt von größer als 220 °C.

Im Allgemeinen beträgt der Anteil des Flammschutzmittelgemischs D) 2 bis 50 Gew.-%, bevorzugt 9 bis 45 Gew.-%, besonders bevorzugt 15 bis 36 Gew.-%, insbesondere bevorzugt 20 bis 30 Gew.-%, bezogen auf die Summe der Komponenten B) bis G).

### Komponente E

Der Reaktionsmischung zur Herstellung der Polyurethan-Hartschaumstoffe können noch weitere Hilfsmittel und/oder Zusatzstoffe E) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-Teile, bezogen (d. h. gerechnet) auf 100 Gew.-Teile der Komponente B), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A) bis G), zugegeben, wobei jedoch der Gehalt an Matten, Vliesen und Geweben aus natürlichen und synthetischen Fasern Werte bis 80 Gew.-%, bezogen auf das Gewicht der Komponenten A) bis G), erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

### Komponente F

Zu Treibmitteln F), welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den Polyisocyanaten A) inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und isoButan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine halogenierten Kohlenwasserstoffe als Treibmittel verwendet. Vorzugsweise werden als chemische Treibmittel Wasser, Ameisensäure-Wasser-Mischungen oder Ameisensäure verwendet, besonders bevorzugte chemische Treibmittel sind Ameisensäure-Wasser-Mischungen oder Ameisensäure. Vorzugsweise werden als physikalische Treibmittel Pentanisomere oder Mischungen von Pentanisomeren verwendet.

Die chemischen Treibmittel können dabei alleine, d.h. ohne Zusatz von physikalischen Treibmitteln, oder zusammen mit physikalischen Treibmittel verwendet werden. Vorzugsweise werden die chemischen Treibmittel zusammen mit physikalischen Treibmitteln verwendet, wobei die Verwendung von Ameisensäure-Wasser-Mischungen oder reiner Ameisensäure zusammen mit Pentanisomeren oder Gemischen aus Pentanisomeren bevorzugt sind.

Die Treibmittel sind entweder ganz oder teilweise in der Polyolkomponente (d.h. B+C+D+E+F+G) gelöst oder werden direkt vor dem Verschäumen der Polyolkomponente über einen Statikmischer zudosiert. Für gewöhnlich liegen Wasser, Ameisensäure-Wasser-Mischungen oder Ameisensäure ganz oder teilweise in der Polyolkomponente gelöst vor und wird das physikalische Treibmittel (beispielsweise Pentan) und gegebenenfalls der Rest des chemischen Treibmittels "online" dosiert.

Zu der Polyolkomponente wird in situ Pentan, eventuell ein Teil des chemischen Treibmittels, sowie teilweise oder vollständig der Katalysator zugegeben. Die Hilfs- und Zusatzstoffe, wie auch die Flammschutzmittel sind bereits im Polyolblend enthalten.

Die eingesetzte Menge des Treibmittels bzw. der Treibmittelmischung liegt bei 1 bis 45 Gew.-%, vorzugsweise 1 bis 30 Gew.-%, besonders bevorzugt 1,5 bis 20 Gew.-%, jeweils bezogen auf die Summe der Komponenten B) bis G).

Dient Wasser, Ameisensäure oder eine Ameisensäure-Wasser-Mischung als Treibmittel, so wird es vorzugsweise der Polyolkomponente (B+C+D+E+F+G) in einer Menge von 0,2 bis 10 Gew.-%, bezogen auf die Komponente B), zugesetzt. Der Zusatz des Wassers, der Ameisensäure oder der Ameisensäure-Wasser-Mischung kann in Kombination mit dem Einsatz der anderen beschriebenen Treibmittel erfolgen. Bevorzugt wird Ameisensäure oder eine Ameisensäure-Wasser-Mischung in Kombination mit Pentan eingesetzt.

### Komponente G

Als Katalysatoren G) zur Herstellung der Polyurethan-Hartschaumstoffe werden insbesondere Verbindungen verwendet, die die Reaktion der reaktive Wasserstoffatome, insbesondere Hydroxylgruppen enthaltenden Verbindungen der Komponenten B) bis G) mit den Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo-(2,2,2)-octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)-s-hexahydrotriazin und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gewichtsteile Katalysator bzw. Katalysatorkombination, bezogen (d. h. gerechnet) auf 100 Gewichtsteile der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Gegenstand der vorliegenden Erfindung ist auch eine Polyolkomponente zur Herstellung von Polyurethan-Hartschaumstoffen enthaltend die Komponenten B) bis G) wie vorstehend beschrieben. Vorzugsweise beträgt das Massenverhältnis der Komponente B) zur Komponente C) mindestens 1.

### Vorzugsweise enthält die Polyolkomponente

10 bis 90 Gew.-% der Polyesterpolyole B),
0 bis 11 Gew.-% der Polyetherpolyole C),
2 bis 50 Gew.-% Flammschutzmittel D),
0,5 bis 20 Gew.-% weitere Hilfs- und Zusatzstoffe E),
1 bis 45 Gew.-% Treibmittel F), und
0,5 bis 10 Gew.-% Katalysatoren G),
jeweils wie vorstehend definiert und jeweils bezogen auf das Gesamtgewicht der Komponenten B) bis G), wobei die Summe der Komponenten B) bis G) 100 Gew.-% beträgt, und wobei das Massenverhältnis der Komponente B) zu Komponente C) mindestens 4 beträgt.

Besonders bevorzugt enthält die Polyolkomponente
40 bis 90 Gew.-% der Polyesterpolyole B),
2 bis 9 Gew.-% der Polyetherpolyole C),
9 bis 45 Gew.-% Flammschutzmittel D),
0,5 bis 20 Gew.-% weitere Hilfs- und Zusatzstoffe E),
1 bis 30 Gew.-% Treibmittel F),
0,5 bis 10 Gew.-% Katalysatoren G), und
jeweils wie vorstehend definiert und jeweils bezogen auf das Gesamtgewicht der Komponenten B) bis G), wobei die Summe der Komponenten B) bis G) 100 Gew.-% beträgt, und wobei das Massenverhältnis der Komponente B) zu Komponente C) mindestens 5 beträgt.

Weiterhin ist das erfindungsgemäße Massenverhältnis der Komponente B) zu der Komponente C) in den erfindungsgemäßen Polyolkomponenten vorzugsweise kleiner als 80, bevorzugt kleiner als 40, besonders bevorzugt kleiner als 30, insbesondere bevorzugt kleiner als 20, speziell bevorzugt kleiner als 16 und im speziellen kleiner als 13.

Weiterhin ist das erfindungsgemäße Massenverhältnis der Komponente A zu der Summe aus B) bis E) größer oder gleich 1,3; vorzugsweise größer oder gleich 1,5; besonders bevorzugt größer oder gleich 1,7; insbesondere größer oder gleich 1,8; insbesondere größer oder gleich 2,0 und im Speziellen größer oder gleich 2,5.

Zur Herstellung der erfindungsgemäßen Polyurethan-Hartschaumstoffe werden die gegebenenfalls modifizierten organischen Polyisocyanate A), die Polyesterpolyole B), gegebenenfalls die Polyetherole C) und die weiteren Komponenten D) bis G) in solchen Mengen vermischt, dass das Äquivalenzverhältnis von NCO-Gruppen der Polyisocyanate A) zur Summe der reaktiven Wasserstoffatome der Komponenten B), sowie D) bis G), 1 bis 6:1, vorzugsweise 1,6 bis 5:1 und insbesondere 2,5 bis 3,5:1 beträgt.

Gegenstand der Erfindung sind auch die Polyurethan-Hartschaumstoffe selbst, sowie deren Verwendung zur Herstellung von Sandwichelementen mit starren oder flexiblen Deckschichten. Diese Sandwichelemente können diskontinuierlich oder kontinuierlich hergestellt werden, bevorzugt ist eine kontinuierliche Herstellung.

Die Erfindung wird durch die nachstehenden Beispiele näher erläutert.

### Beispiele

Es wurden die nachstehenden Polyesterpolyole (Polyesterol 1, Polyesterol 2) eingesetzt.

### Polyesterol 1:

Veresterungsprodukt von Phthalsäureanhydrid (25 Mol-%), Ölsäure (15 Mol-%), Diethylenglykol (37 Mol-%) und einem Polyether (23 Mol-%) auf Basis Trimethylolpropan und Ethylenoxid mit einer OH-Funktionalität von 3 und einer Hydroxylzahl von 610 mg KOH/g, hergestellt in Gegenwart von Imidazol als Alkoxylierungskatalysator und Verwendung des Polyethers ohne Aufarbeitung. Das Polyesterol weist eine Hydroxylfunktionalität von 2,2, eine Hydroxylzahl von 244 mg KOH/g und einen Ölsäuregehalt im Polyesterol von 24 Gew.-% auf.

### Polyesterol 2:

Veresterungsprodukt von Phthalsäureanhydrid (30 Mol-%), Ölsäure (12 Mol-%), Diethylenglykol (40 Mol-%) und Trimethylolpropan (18 Mol-%) mit einer Hydroxylfunktionalität von 2,2, einer Hydroxylzahl von 249 mg KOH/g und einem Ölsäuregehalt im Polyesterol von 25 Gew.-%.

Als Flammschutzmittel wurden verwendet:
Trischlorisopropylphosphat (TCPP) mit einem Siedepunkt von 244 °C.
Triethylphosphat (TEP) mit einem Siedepunkt von 215 °C.
Bestimmung von Härtung und Sprödigkeit des Polyurethan-Hartschaumstoffs

Die Härtung wurde mit dem Bolzentest ermittelt. Dazu wurde 2,5; 3; 4 und 5 Minuten nach Vermischung der Komponenten des Polyurethan-Schaumstoffs in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs.

Die Sprödigkeit des Polyisocyanurat-Hartschaumstoffes wurde direkt nach der Verschäumung durch Drücken des Schaums subjektiv bestimmt (Sprödigkeit subjektiv) und nach einem Notensystem von 1 bis 7 beurteilt. 1 bedeutet, dass der Schaum kaum spröde ist, 7 bedeutet, dass der Schaum eine hohe Sprödigkeit aufweist. Ferner wurde die Sprödigkeit eingeteilt, indem der Zeitpunkt ermittelt wurde, bei dem die Oberfläche des Hartschaumstoffes beim Bolzentest sichtbare Bruchzonen aufwies (Bruch beim Bolzentest).

### Bestimmung der Eigenreaktivität der Polyurethansysteme

Die nachfolgend beschriebenen Polyurethansysteme wurden durch Variation der Polyurethan-Katalysatorkonzentration auf eine einheitliche Abbindezeit eingestellt. Wurde bei einem System eine geringere Katalysatorkonzentration benötigt, bedeutete dies, dass das System eine höhere Eigenreaktivität aufwies.

### Vergleichsbeispiele 1, 2 sowie Beispiele 1, 2

### Herstellung von Polyurethan-Hartschaumstoffen

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyolkomponente zu Isocyanat von 100 : 250 verschäumt.

### Vergleichsbeispiel 1:

Aus
43,9 Gewichtsteilen des Polyesterol 2 mit einer Hydroxylzahl von 249 mg KOH/g, basierend auf dem Veresterungsprodukt aus Phthalsäureanhydrid, Ölsäure, Diethylenglykol Trimethylolpropan ;
8 Gewichtsteilen eines Polyetherols aus ethoxyliertem Ethylenglykol mit einer Hydroxyfunktionalität von 2 und einer Hydroxyzahl von 190 mg KOH/g;
43 Gewichtsteilen Flammschutzmittel Trischlorisopropylphosphat (TCPP); und
3,1 Gewichtsteilen einer 85 %igen Ameisensäure-Lösung mit Wasser; und
2 Gewichtsteilen silikonhaltiger Schaumstabilisator (Tegostab® B8467 der Fa.Evonik) wurde durch Vermischen eine Polyolkomponente hergestellt.

Die Polyolkomponente wurde mit 250 Gewichtsteilen Polymer-MDI mit einem NCO-Gehalt von 31,5 Gew.-% (Lupranat^{®} M50 der BASF SE; Viskosität von ca. 500 mPas bei 25 °C) in Anwesenheit von n-Pentan (16 Gew.-Teile), einer 70 %igen Bis-2-dimethylaminoethylether Lösung in Dipropylenglykol (Niax® A1 der Firma Momentivel in Tabelle 1 als Katalysator 1 bezeichnet) und 2,6 Gew.-% einer 36 %igen Kaliumformiat Lösung in Monoethylenglykol umgesetzt. Die Komponenten wurden mittels eines Laborrührwerks intensiv vermischt. Die Menge der 70 %igen Bis-2-dimethylaminoethylether-Lösung in Dipropylenglykol (Niax® A1 der Firma Momentive) wurden so ausgewählt, dass die Abbindezeit 51 Sekunden betrug. Der resultierende Schaum wies eine Dichte von 33 kg/m³ auf.

### Vergleichsbeispiel 2:

Aus
43,9 Gewichtsteilen des Polyesterol 1 mit einer Hydroxylzahl von 244 mg KOH/g, basierend auf dem Veresterungsprodukt aus Phthalsäureanhydrid, Ölsäure, Diethylenglykol und einem Polyether auf Basis Trimethylolpropan und Ethylenoxid;
8 Gewichtsteilen eines Polyetherols aus ethoxyliertem Ethylenglykol mit einer Hydroxyfunktionalität von 2 und einer Hydroxyzahl von 190 mg KOH/g;
43 Gewichtsteilen Flammschutzmittel Trischlorisopropylphosphat (TCPP); und
3,1 Gewichtsteilen einer 85 %igen Ameisensäure-Lösung mit Wasser; und
2 Gewichtsteilen silikonhaltiger Schaum stabilisator (Tegostab® B8467 der Fa.Evonik) wurde durch Vermischen eine Polyolkomponente hergestellt.

Die Polyolkomponente wurde mit 250 Gewichtsteilen Polymer-MD) mit einem NCO-Gehalt von 31,5 Gew.-% (Lupranat^{®} M50 der BASF SE; Viskosität von ca. 500 mPas bei 25 °C) in Anwesenheit von n-Pentan (16 Gew.-Teile), einer 70 %igen Bis-2-dimethylaminoethylether-Lösung in Dipropylenglykol (Niax® A1 der Firma Momentive/ in Tabelle 1 als Katalysator 1 bezeichnet) und 2,6 Gew.-% einer 36 %igen Kaliumformiat-Lösung In Monoethylenglykol umgesetzt. Die Komponenten wurden mittels eines Laborrührwerks intensiv vermischt. Die Menge der 70 %igen Bis-2-dimethylaminoethylether-Lösung in Dipropylenglykol (Niax® A1 der Firma Momentive) wurden so ausgewählt, dass die Abbindezeit 51 Sekunden betrug. Der resultierende Schaum wies eine Dichte von 33 kg/m³ auf.

### Beispiel 1: nicht erfindungsgemäß

Aus
43,9 Gewichtsteilen des Polyesterol 2 mit einer Hydroxylzahl von 249 mg KOH/g, basierend auf dem Veresterungsprodukt aus Phthalsäureanhydrid, Ölsäure, Diethylenglykol und Trimethylolpropan;
8 Gewichtsteilen eines Polyetherols aus ethoxyliertem Ethylenglykol mit einer Hydroxyfunktionalität von 2 und einer Hydroxyzahl von 190 mg KOH/g;
25 Gewichtsteilen Flammschutzmittel Trischlorisopropylphosphat (TCPP); und
18 Gewichtsteilen Flammschutzmittel Triethylphosphat (TEP); und
3,1 Gewichtsteilen einer 85 %igen Ameisensäure-Lösung mit Wasser; und
2 Gewichtsteilen silikonhaltiger Schaumstabilisator (Tegostab® B8467 der Fa.Evonik) wurde durch Vermischen eine Polyolkomponente hergestellt.

Die Polyolkomponente wurde mit 250 Gewichtsteilen Polymer-MDI mit einem NCO-Gehalt von 31,5 Gew.-% (Lupranat^{®} M50 der BASF SE; Viskosität von ca. 500 mPas bei 25 °C) in Anwesenheit von n-Pentan (16 Gew.-Teile), einer 70 %igen Bis-2-dimethylaminoethylether-Lösung in Dipropylenglykol (Niax® A1 der Firma Momentive/ in Tabelle 1 als Katalysator 1 bezeichnet) und 2,6 Gew.-% einer 36 %igen Kaliumformiat-Lösung in Monoethylenglykol umgesetzt. Die Komponenten wurden mittels eines Laborrührwerks intensiv vermischt. Die Menge der 70 %igen Bis-2-dimethylaminoethylether-Lösung in Dipropylenglykol (Niax® A1 der Firma Momentive) wurden so ausgewählt, dass die Abbindezeit 51 Sekunden betrug. Der resultierende Schaum wies eine Dichte von 33 kg/m³ auf.

### Beispiel 2:

Aus
43,9 Gewichtsteilen des Polyesterol 1 mit einer Hydroxylzahl von 244 mg KOH/g, basierend auf dem Veresterungsprodukt aus Phthalsäureanhydrid, Ölsäure, Diethylenglykol und einem Polyether auf Basis Trimethylolpropan und Ethylenoxid;
8 Gewichtsteilen eines Polyetherols aus ethoxyliertem Ethylenglykol mit einer Hydroxyfunktionalität von 2 und einer Hydroxyzahl von 190 mg KOH/g;
25 Gewichtsteilen Flammschutzmittel Trischlorisopropylphosphat (TCPP); und
18 Gewichtsteilen Flammschutzmittel Triethylphosphat (TEP); und
3,1 Gewichtsteilen einer 85 %igen Ameisensäure-Lösung mit Wasser; und
2 Gewichtsteilen silikonhaltiger Schaumstabilisator (Tegostab® B8467 der Fa.Evonik) wurde durch Vermischen eine Polyolkomponente hergestellt.

Die Polyolkomponente wurde mit 250 Gewichtsteilen Polymer-MDI mit einem NCO-Gehalt von 31,5 Gew.-% (Lupranat^{®} M50 der BASF SE; Viskosität von ca. 500 mPas bei 25 °C) in Anwesenheit von n-Pentan (16 Gew.-Teile), einer 70 %igen Bis-2-dimethylaminoethylether-Lösung in Dipropylenglykol (Niax® A1 der Firma Momentive - in Tabelle 1 als Katalysator 1 bezeichnet) und 2,6 Gew.-% einer 36 gew.-%igen Kaliumformiat Lösung in Monoethylenglykol umgesetzt. Die Komponenten wurden mittels eines Laborrührwerks intensiv vermischt. Die Menge an der 70 %igen Bis-2-dimethylaminoethylether-Lösung in Dipropylenglykol (Niax® A1 der Firma Momentive) wurden so ausgewählt, dass die Abbindezeit 51 Sekunden betrug. Der resultierende Schaum wies eine Dichte von 33 kg/m³ auf.

Die Ergebnisse sind in Tabelle 1 zusammengefasst.

**Tabelle 1:**

| | Vergleichsbeispiel 1 | Vergleichsbeispiel 2 | Beispiel 1 (*) | Beispiel 2 |
|---|---|---|---|---|
| Härtung [N] | | | | |
| 2,5 min | 47 | 50 | 52 | 62 |
| 3 min | 54 | 58 | 63 | 73 |
| 4 min | 71 | 70 | 80 | 85 |
| 5 min | 75 | 65 | 89 | 86 |
| Summe (2,5; 3,4 und 5 min) | 247 | 243 | 284 | 306 |
| Sprödigkeit (subjektiv) | 7 | 7 | 6 | 3 |
| Bruch beim Bolzentest | 4 | 4 | 4 | 6 |
| Katalysator 1 | 2,6 | 2,1 | 1,4 | 1,0 |
| Viskosität der Polyolkomponente bei T = 20 °C | 618 | 297 | 182 | 106 |

| | | | | |
|---|---|---|---|---|
| (*) nicht erfindungsgemäß | | | | |

Man erkennt deutlich, dass die erfindungsgemäßen Polyolkomponenten die Eigenreaktivität des Systems erhöhen. Es werden gemäß Beispielen 1 und 2 nur 1,0 Gewichtsteile bzw. 1,4 Gewichtsteile des Katalysators 1 benötigt im Vergleich zu 2,1 bzw. 2,6 Gewichtsteilen in den Vergleichsbeispielen1 und 2.

Außerdem führen die erfindungsgemäßen Polyolkomponenten zu einer verbesserten Schaumhärtung. Die Summe der Messungen bei 2,5 min, 3 min, 4 min und 5 min beträgt 306 N bzw. 284 N und liegt damit deutlich über den Resultaten der Vergleichsbeispiele, die Werte von 247 N bzw. 243 N aufweisen.

Weiterhin wird durch die Erfindung die Viskosität der Polyolkomponenten abgesenkt von 618 bzw. 297 mPas bei 20 °C auf 182 bzw. 106 mPas bei 20°C. Dies führt zu einer besseren Vermischbarkeit der Polyolkomponente mit dem Isocyanat. Dadurch wird die Häufigkeit von Oberflächendefekten vermindert und eine verbesserte Schaumoberfläche erzielt.

Durch die erfindungsgemäßen Polyolkomponenten wurde zudem die Sprödigkeit des Dämmstoffs herabgesenkt und damit die Neigung zur Staubbildung und Rissbildung beim Sägen von Verbundelementen mit Polyisocyanurat Schaumkern. Die Sprödigkeit nimmt sowohl gemessen an der subjektiven Beurteilung mittels Fingerdruck an dem Schaum nach dem Verschäumen, als auch gemessen an der Einteilung nach der Bruchzeit bei der Härtungsmessung ab.

## Patentansprüche

1. Verfahren zur Herstellung von Polyurethan-Hartschaumstoffen durch Umsetzung von
A) einem oder mehreren organischen Polyisocyanaten,
B) einem oder mehreren Polyesterpolyolen,
C) gegebenenfalls einem oder mehreren Polyetherpolyolen,
D) einem Flammschutzmittelgemisch,
E) weiteren Hilfsmitteln oder Zusatzstoffen,
F) einem oder mehreren Treibmitteln, sowie
G) Katalysatoren,
**dadurch gekennzeichnet, dass** das Flammschutzmittelgemisch D)
d1) 10 bis 90 Gew.-%, bezogen auf die Menge des Flammschutzmittelgemisches, eines Flammschutzmittels mit einem Siedepunkt von kleiner oder gleich 220°C, und
d2) 10 bis 90 Gew.-%, bezogen auf die Menge des Flammschutzmittelgemischs, eines phosphorhaltigen Flammschutzmittels mit einem Siedepunkt von über 220 °C,
wobei die Summe der Komponenten d1) und d2) 100 Gew.-% ergibt, enthält, und
das Polyesterpolyol B) mindestens ein Polyetheresterpolyol, enthaltend das Veresterungsprodukt von
b1) 10 bis 70 Mol-% einer Dicarbonsäurezusammensetzung, enthaltend
b11) 50 bis 100 Mol%, bezogen auf die Dicarbonsäurezusammensetzung, einer oder mehrerer aromatischer Dicarbonsäuren oder Derivate derselben,
b12) 0 bis 50 Mol-%, bezogen auf die Dicarbonsäurezusammensetzung b1), einer oder mehrerer aliphatischer Dicarbonsäuren oder Derivate derselben,
b2) 2 bis 30 Mol-% einer oder mehrerer Fettsäuren oder Fettsäurederivate,
b3) 10 bis 70 Mol-% eines oder mehrerer aliphatischer oder cycloaliphatischer Diole mit 2 bis 18 C-Atomen oder Alkoxylate derselben,
b4) 2 bis 50 Mol-% eines Polyetherpolyols mit einer Funktionalität größer oder gleich 2, hergestellt durch Alkoxylierung eines Polyols mit einer Funktionalität größer oder gleich 2,
jeweils bezogen auf die Gesamtmenge der Komponenten b1) bis b4), wobei sich die Komponenten b1) bis b4) zu 100 Mol-% addieren, enthält.

2. Verfahren nach Anspruch 1, **dadurch gekennzeichnet, dass** das Flammschutzmittel d1) mit einem Siedepunkt von kleiner oder gleich 220 °C ausgewählt ist aus der Gruppe bestehend aus Diethylethylphosphonat (DEEP), Triethylphosphat (TEP), Dimethylpropylphosphonat (DMPP) und deren Gemischen.

3. Verfahren nach Anspruch 1 oder 2, **dadurch gekennzeichnet, dass** das Flammschutzmittel d2) mit einem Siedepunkt von über 220 °C ausgewählt ist aus der Gruppe bestehend aus Tris-(2-chlorpropyl)phosphat (TCPP), Diphenylkresylphosphat (DPK),Triphenylphosphat (TPP) und deren Gemischen.

4. Verfahren nach einem der Ansprüche 1 bis 3, **dadurch gekennzeichnet, dass** das Polyesterpolyol B) ausschließlich aus einem oder mehreren Polyetheresterpolyolen, wie in Anspruch 1 definiert, besteht.

5. Verfahren nach einem der Ansprüche 1 bis 4, **dadurch gekennzeichnet, dass** das Polyetherpolyol b4) eine Funktionalität von > 2 aufweist.

6. Verfahren nach einem der Ansprüche1 bis 5, **dadurch gekennzeichnet, dass** das Polyetherpolyol b4) hergestellt ist durch Alkoxylierung eines Polyols, ausgewählt aus der Gruppe bestehend aus Sorbit, Pentaerythrit, Trimethylolpropan, Glycerin, Polyglycerin und deren Gemischen.

7. Verfahren nach einem der Ansprüchel bis 6, **dadurch gekennzeichnet, dass** das Polyetherpolyol b4) durch Alkoxylierung mit Ethylenoxid hergestellt ist.

8. Verfahren nach einem der Ansprüche 1 bis 7, **dadurch gekennzeichnet, dass** die Komponente b11) eine oder mehrere Verbindungen, ausgewählt aus der Gruppe bestehend aus Terephthalsäure, Dimethylterephthalat, Polyethylenterephthalat, Phthalsäure, Phthalsäureanhydrid und Isopththalsäure, enthält.

9. Verfahren nach einem der Ansprüche 1 bis 8, **dadurch gekennzeichnet, dass** die Dicarbonsäurezusammensetzung b1) keine aliphatischen Dicarbonsäuren b12) enthält.

10. Verfahren nach einem der Ansprüche1 bis 9, **dadurch gekennzeichnet, dass** die Fettsäure oder das Fettsäurederivat b2) ausgewählt sind aus der Gruppe bestehend aus Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl sowie Fettsäuren, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachldonsäure, Timnodonsäure, Clupanodonsäure und Cervonsäure.

11. Verfahren nach Anspruch 10, **dadurch gekennzeichnet, dass** die Fettsäure oder das Fettsäurederivat b2) ausgewählt ist aus der Gruppe bestehend aus Ölsäure und Ölsäuremethylester.

12. Verfahren nach einem der Ansprüche 1 bis 11, **dadurch gekennzeichnet, dass** die aliphatischen oder cycloaliphatischen Diole b3) ausgewählt sind aus der Gruppe bestehend aus Ethylenglykol, Diethylenglykol, Propylenglykol, 1,3-Propandiol, 1,4-Butandiol, 1,5-pentandiol, 1,6-Hexandiol, 2-Methyl-1,3-propandiol und 3-Methyl-1 5-pentandiol und Alkoxylaten derselben.

13. Verfahren nach einem der Ansprüche 1 bis 12, **dadurch gekennzeichnet, dass** die Polyetherpolyole C) ausgewählt sind aus der Gruppe bestehend aus Polyoxypropylenpolyolen und Polyoxyethylenpolyolen.

14. Verfahren nach einem der Ansprüche 1 bis 13, **dadurch gekennzeichnet, dass** als Polyetherpolyol C) ausschließlich Polyethylenglykol eingesetzt wird.

15. Verfahren nach einem der Ansprüche 1 bis 14, **dadurch gekennzeichnet, dass** das Massenverhältnis der Komponente A) zu der Summe aus B) bis E) größer oder gleich 1,3 ist.

16. Polyurethan-Hartschaumstoff, erhältlich nach dem Verfahren gemäß einem der Ansprüche 1 bis 15.

17. Verwendung von Polyurethan-Hartschaumstoffen nach Anspruch 16 zur Herstellung von Sandwichelementen mit starren oder flexiblen Deckschichten.

18. Polyolkomponente zur Herstellung von Polyurethan-Hartschaumstoffen enthaltend die Komponenten B) bis G) wie in den Ansprüchen 1 bis 15 definiert, **dadurch gekennzeichnet, dass** das Massenverhältnis der Komponente B) zur Komponente C) mindestens 1 beträgt.

## Claims

1. A process for producing rigid polyurethane foams by reaction of
A) one or more organic polyisocyanates,
B) one or more polyester polyols,
C) optionally one or more polyether polyols,
D) a flame-retardant mixture,
E) further auxiliaries or addition agents,
F) one or more blowing agents, and also
G) catalysts,
wherein said flame-retardant mixture D) comprises
d1) 10 to 90 wt%, based on the amount of flameretardant mixture, of a flame retardant having a boiling point of not more than 220°C, and
d2) 10 to 90 wt%, based on the amount of flame-retardant mixture, of a phosphorus-containing flame retardant having a boiling point of above 220°C,
wherein said components d1) and d2) total 100 wt%, and
said polyester polyol B) comprises at least one polyetherester polyol comprising the esterification product of
b1) 10 to 70 mol% of a dicarboxylic acid composition comprising
b11) 50 to 100 mol%, based on the dicarboxylic acid composition, of one or more aromatic dicarboxylic acids or derivatives thereof,
b12) 0 to 50 mol%, based on said dicarboxylic acid composition b1), of one or more aliphatic dicarboxylic acids or derivatives thereof,
b2) 2 to 30 mol% of one or more fatty acids and/or fatty acid derivatives,
b3) 10 to 70 mol% of one or more aliphatic or cycloaliphatic diols having 2 to 18 carbon atoms or alkoxylates thereof,
b4) 2 to 50 mol% of a polyether polyol having a functionality of not less than 2, prepared by alkoxylating a polyol having a functionality of not less than 2,
all based on the total amount of components b1) to b4), wherein said components b1) to b4) sum to 100 mol%.

2. The process according to claim 1 wherein said flame retardant d1) having a boiling point of not more than 220°C is selected from the group consisting of diethyl ethylphosphonate (DEEP), triethyl phosphate (TEP), dimethyl propylphosphonate (DMPP) and mixtures thereof.

3. The process according to claim 1 or 2 wherein said flame retardant d2) having a boiling point of above 220°C is selected from the group consisting of tris(2-chloropropyl) phosphate (TCPP), diphenyl cresyl phosphate (DPC), triphenyl phosphate (TPP) and mixtures thereof.

4. The process according to any of claims 1 to 3, wherein said polyester polyol B) consists exclusively of one or more polyetherester polyols as defined in claim 1.

5. The process according to any of claims 1 to 4 wherein said polyether polyol b4) has a functionality of > 2.

6. The process according to any of claims 1 to 5 wherein said polyether polyol b4) is prepared by alkoxylating a polyol selected from the group consisting of sorbitol, pentaerythritol, trimethylolpropane, glycerol, polyglycerol and mixtures thereof.

7. The process according to any of claims 1 to 6 wherein said polyether polyol b4) is produced by alkoxylation with ethylene oxide.

8. The process according to any of claims 1 to 7 wherein said component b11) comprises one or more compounds selected from the group consisting of terephthalic acid, dimethyl terephthalate, polyethylene terephthalate, phthalic acid, phthalic anhydride and isopththalic acid.

9. The process according to any of claims 1 to 8 wherein said dicarboxylic acid composition b1) comprises no aliphatic dicarboxylic acids b12).

10. The process according to any of claims 1 to 9 wherein said fatty acid or fatty acid derivative b2) is selected from the group consisting of castor oil, polyhydroxy fatty acids, ricinoleic acid, hydroxylmodified oils, grapeseed oil, black cumin oil, pumpkin kernel oil, borage seed oil, soybean oil, wheat germ oil, rapeseed oil, sunflower oil, peanut oil, apricot kernel oil, pistachio oil, almond oil, olive oil, macadamia nut oil, avocado oil, sea buckthorn oil, sesame oil, hemp oil, hazelnut oil, primula oil, wild rose oil, safflower oil, walnut oil and fatty acids, hydroxyl-modified fatty acids and fatty acid esters based on myristoleic acid, palmitoleic acid, oleic acid, vaccenic acid, petroselic acid, gadoleic acid, erucic acid, nervonic acid, linoleic acid, α- and γ-linolenic acid, stearidonic acid, arachidonic acid, timnodonic acid, clupanodonic acid and cervonic acid.

11. The process according to claim 10 wherein said fatty acid or fatty acid derivative b2) is selected from the group consisting of oleic acid and methyl oleate.

12. The process according to any of claims 1 to 11 wherein said aliphatic or cycloaliphatic diols b3) are selected from the group consisting of ethylene glycol, diethylene glycol, propylene glycol, 1,3-propanediol, 1,4-butanediol, 1,5-pentanediol, 1,6-hexanediol, 2-methyl-1,3-propanediol and 3-methyl-1,5-pentanediol and alkoxylates thereof.

13. The process according to any of claims 1 to 12 wherein said polyether polyols C) are selected from the group consisting of polyoxypropylene polyols and polyoxyethylene polyols.

14. The process according to any of claims 1 to 13 wherein polyether polyol C) utilizes exclusively polyethylene glycol.

15. The process according to any of claims 1 to 14 wherein the mass ratio of component A) to the sum total of B) to E) is not less than 1.3.

16. A rigid polyurethane foam obtainable by the process according to any of claims 1 to 15.

17. The use of rigid polyurethane foams according to claim 16 for production of sandwich elements having rigid or flexible outer layers.

18. A polyol component for producing rigid polyurethane foams comprising said components B) to G) as defined in claims 1 to 15, wherein the mass ratio of component B) to component C) is at least 1.

## Revendications

1. Procédé de fabrication de mousses rigides de polyuréthanne, par réaction
A) d'un ou plusieurs polyisocyanates organiques,
B) d'un ou plusieurs polyesterpolyols,
C) éventuellement d'un ou plusieurs polyétherpolyols,
D) d'un mélange de retardateurs de flamme,
E) d'autres adjuvants ou additifs,
F) d'un ou plusieurs agents porogènes, ainsi que
G) de catalyseurs,
**caractérisé en ce que** le mélange de retardateurs de flamme D) contient
d1) 10 à 90 % en poids, par rapport à la quantité du mélange de retardateurs de flamme, d'un retardateur de flamme ayant un point d'ébullition inférieur ou égal à 220°C, et
d2) 10 à 90 % en poids, par rapport à la quantité du mélange de retardateurs de flamme, d'un retardateur de flamme phosphoré ayant un point d'ébullition supérieur à 220°C,
la somme des composants d1) et d2) faisant 100 % en poids, et
le polyesterpolyol B) contient au moins un polyétheresterpolyol contenant le produit de l'estérification
b1) de 10 à 70 % en moles d'une composition d'acides dicarboxyliques contenant
b11) 50 à 100 % en moles, par rapport à la composition d'acides dicarboxyliques, d'un ou plusieurs acides dicarboxyliques aromatiques ou dérivés de ceux-ci,
b12) 0 à 50 % en moles, par rapport à la composition d'acides dicarboxyliques b1), d'un ou plusieurs acides dicarboxyliques aliphatiques ou dérivés de ceux-ci,
b2) de 2 à 30 % en moles d'un ou plusieurs acides gras ou dérivés d'acides gras,
b3) 10 à 70 % en moles d'un ou plusieurs diols aliphatiques ou cycloaliphatiques ayant 2 à 18 atomes de carbone, ou produits d'alcoxylation de ceux-ci,
b4) de 2 à 50 % en moles d'un polyétherpolyol ayant une fonctionnalité supérieure ou égale à 2, préparé par alcoxylation d'un polyol ayant une fonctionnalité supérieure ou égale à 2,
dans tous les cas par rapport à la quantité totale des composants b1) à b4), les composants b1) à b4) s'additionnant pour donner 100 % en moles.

2. Procédé selon la revendication 1, **caractérisé en ce que** le retardateur de flamme d1) ayant un point d'ébullition inférieur ou égal à 220°C est choisi dans le groupe consistant en l'éthylphosphonate de diéthyle (DEEP), le phosphate de triéthyle (TEP), le propylphosphonate de diméthyle (DMPP) et les mélanges de ceux-ci.

3. Procédé selon la revendication 1 ou 2, **caractérisé en ce que** le retardateur de flamme d2) ayant un point d'ébullition supérieur à 220°C est choisi dans le groupe consistant en le phosphate de tris(2-chloropropyle) (TCPP), le phosphate de diphénylcrésyle (DPK), le phosphate de triphényle (TPP) et les mélanges de ceux-ci.

4. Procédé selon l'une des revendications 1 à 3, **caractérisé en ce que** le polyesterpolyol B) est exclusivement constitué d'un ou plusieurs polyétheresterpolyols tels que définis dans la revendication 1.

5. Procédé selon l'une des revendications 1 à 4, **caractérisé en ce que** le polyétherpolyol b4) présente une fonctionnalité > 2.

6. Procédé selon l'une des revendications 1 à 5, **caractérisé en ce que** le polyétherpolyol b4) est préparé par alcoxylation d'un polyol choisi dans le groupe consistant en le sorbitol, le pentaérythritol, le triméthylolpropane, le glycérol, le polyglycérol ou les mélanges de ceux-ci.

7. Procédé selon l'une des revendications 1 à 6, **caractérisé en ce que** le polyétherpolyol b4) est préparé par alcoxylation avec de l'oxyde d'éthylène.

8. Procédé selon l'une des revendications 1 à 7, **caractérisé en ce que** le composant b11) contient un ou plusieurs composés choisis dans le groupe consistant en l'acide téréphtalique, le téréphtalate de diméthyle, le poly(téréphtalate d'éthylène), l'acide phtalique, l'anhydride phtalique et l'acide isophtalique.

9. Procédé selon l'une des revendications 1 à 8, **caractérisé en ce que** la composition d'acides dicarboxyliques b1) ne contient pas d'acides dicarboxyliques aliphatiques b12).

10. Procédé selon l'une des revendications 1 à 9, **caractérisé en ce que** l'acide gras ou le dérivé d'acide gras b2) est choisi dans le groupe consistant en l'huile de ricin, les acides gras polyhydroxylés, l'acide ricinoléique, les huiles à modification hydroxyle, l'huile de pépin de raisin, l'huile de cumin noir, l'huile de graines de citrouille, l'huile de graines de bourrache, l'huile de soja, l'huile de graines de blé, l'huile de colza, l'huile de tournesol, l'huile d'arachide, l'huile de noyaux d'abricot, l'huile de pistache, l'huile d'amande, l'huile d'olive, l'huile de macadamia, l'huile d'avocat, l'huile d'argousier, l'huile de sésame, l'huile de chanvre, l'huile de noisette, l'huile d'onagre, l'huile de rose sauvage, l'huile de chardon, l'huile de noix, ainsi que les acides gras, les acides gras à modification hydroxyle et les esters d'acides gras à base d'acide myristoléique, d'acide palmitoléique, d'acide oléique, d'acide vaccénique, d'acide pétrosélinique, d'acide gadoléique, d'acide érucasique, d'acide nervonique, d'acide linoléique, d'acide α- et γ-linolénique, d'acide stéaridonique, d'acide arachidonique, d'acide timnodonique, d'acide clupanodonique et d'acide cervonique.

11. Procédé selon la revendication 10, **caractérisé en ce que** l'acide gras ou le dérivé d'acide gras b2) est choisi dans le groupe consistant en l'acide oléique et l'ester méthylique de l'acide oléique.

12. Procédé selon l'une des revendications 1 à 11, **caractérisé en ce que** les diols aliphatiques ou cycloaliphatiques b3) sont choisis dans le groupe consistant en l'éthylèneglycol, le diéthylèneglycol, le propylèneglycol, le 1,3-propanediol, le 1,4-butanediol, le 1,5-pentanediol, le 1,6-hexanediol, le 2-méthyl-1,3-propanediol et le 3-méthyl-1,5-pentadiol et les produits d'alcoxylation de ceux-ci.

13. Procédé selon l'une des revendications 1 à 12, **caractérisé en ce que** les polyétherpolyols C) sont choisis dans le groupe consistant en les polyoxypropylènepolyols et les polyoxyéthylènepolyols.

14. Procédé selon l'une des revendications 1 à 13, **caractérisé en ce qu'**on utilise en tant que polyétherpolyol C) exclusivement du polyéthylèneglycol.

15. Procédé selon l'une des revendications 1 à 14, **caractérisé en ce que** le rapport en masse du composant A) à la somme de B) à E) est supérieur ou égal à 1,3.

16. Mousse rigide de polyuréthanne pouvant être obtenue par le procédé selon l'une des revendications 1 à 15.

17. Utilisation de mousses rigides de polyuréthanne selon la revendication 16 pour fabriquer des éléments en sandwich comportant des couches de couverture rigides ou souples.

18. Composant polyol pour la fabrication de mousses rigides de polyuréthanne, contenant les composants B) à G) tels que définis dans les revendications 1 à 15, **caractérisé en ce que** le rapport en masse du composant B) au composant (C) est d'au moins 1.
